# EUROPEAN PATENT APPLICATION

(11) **EP 4 773 135 A1**
(43) Date of publication of application: **08.07.2026**
(21) Application number: 24858449.2
(22) Date of filing: 22.08.2024
(51) Int. Cl.: G10L 15/22, G10L 17/22, G10L 15/26

(54) **VOICE INTERACTION METHOD AND APPARATUS, ELECTRONIC DEVICE, STORAGE MEDIUM AND VEHICLE**

(30) Priority: 29.08.2023 CN 202311100664
(71) Applicant: Beijing Co Wheels Technology Co., Ltd., Beijing 101300 (CN)
(72) Inventor: HE, Yongqiang, Beijing 101300 (CN); WU, Nan, Beijing 101300 (CN); HU, Han, Beijing 101300 (CN)
(74) Representative: Maiwald GmbH
(86) International application number: PCT/CN2024/114057
(87) International publication number: WO 2025/044907

(57) **Abstract**

The present disclosure provides a voice interaction method and apparatus, an electronic device, a storage medium and a vehicle. The method comprises: acquiring a first voice generated in a first sound zone in a compartment in a sound zone locked mode, wherein the first sound zone is a sound zone for awakening a voice assistant; in response to the first voice triggering a multi-person interaction mode, acquiring a second voice generated in a second sound zone in the compartment, and determining a second intent of the second voice; and when determining that the second intent is correlated to a first intent, responding to the second intent, wherein the first intent is correlated to the first voice. When a sound zone is locked, an intent of a non-awakening user can be responded on the basis of the correlation between the second voice and the first voice, so that the technical effect of interaction between multiple persons and an in-vehicle infotainment system in a sound zone locked mode can be realized, thereby improving user experience.

## Description

### CROSS-REFERENCE TO RELATED APPLICATION

The present application claims priority to a Chinese Application filed with the China National Intellectual Property Administration on August 29, 2023, with Application number 202311100664.0 and entitled "Voice interaction method, apparatus, electronic device, storage medium and vehicle", the entire content of which is incorporated herein by reference.

### TECHNICAL FIELD

The present application relates to the field of intelligent in-vehicle infotainment (IVI), and relates to, but is not limited to, a voice interaction method, an apparatus, an electronic device, a storage medium and a vehicle.

### BACKGROUND

With the development of vehicle-mounted intelligent interaction systems, a sound zone locking function can be implemented. When a sound zone is locked, an in-vehicle infotainment (IVI) voice assistant can only listen to a voice content in the sound zone where a wake-up user is located, and cannot recognize voice from other sound zones. For example, when the voice assistant is woken up in the driver's sound zone to initiate a navigation request, a front passenger cannot assist in selecting a route via voice during route selection. For another example, when the driver user wakes up the voice assistant and says "turn on seat heating", if the front passenger also wants to turn on seat heating, the front passenger has to wake up the voice assistant again and say "turn on seat heating", instead of directly saying "me too". Therefore, when the sound zone is locked, if the voice of other users in the vehicle is associated with the voice of the wake-up user, the IVI cannot respond to the voice of other users, thus affecting the user experience.

### SUMMARY

The present application provides a voice interaction method, an apparatus, an electronic device, a storage medium and a vehicle, aiming to solve at least one of the technical problems in the related art to a certain extent.

According to a first aspect of embodiments of the present application, a voice interaction method is provide, including: acquiring a first voice generated in a first sound zone in a vehicle cabin in a sound zone locking mode, in which the first sound zone is a sound zone where a voice assistant is woken up; triggering a multi-person interaction mode in response to the first voice, acquiring a second voice generated in a second sound zone in the vehicle cabin, and determining a second intent of the second voice; and responding to the second intent in a case of determining that the second intent is related to a first intent, in which the first intent is related to the first voice.

According to a second aspect of embodiments of the present application, a voice interaction apparatus is provide, including: a first acquisition module configured to acquire a first voice generated in a first sound zone in a vehicle cabin in a sound zone locking mode, in which the first sound zone is a sound zone where a voice assistant is woken up; a second acquisition module configured to trigger a multi-person interaction mode in response to the first voice, acquire a second voice generated in a second sound zone in the vehicle cabin, and determine a second intent of the second voice; and a response module configured to respond to the second intent in a case of determining that the second intent is related to a first intent, in which the first intent is related to the first voice.

According to a third aspect of embodiments of the present application, an electronic device is provide, including: at least one processor; and a memory communicatively coupled to the at least one processor; in which the memory stores an instruction executable by the at least one processor, and the instruction, when executed by the at least one processor, enables the at least one processor to perform the voice interaction method according to the embodiments of the present application.

According to a fourth aspect of embodiments of the present application, a non-transitory computer-readable storage medium storing a computer instruction is provide. The computer instruction is used to cause the computer to perform the voice interaction method disclosed in the embodiments of the present application.

According to a fifth aspect of embodiments of the present application, a vehicle is provided, which includes the electronic device according to the third aspect.

According to a sixth aspect of embodiments of the present application, a computer program product is provided, including a computer-executable instruction or a computer program, in which the computer-executable instruction or the computer program, when executed by a processor, implement the voice interaction method disclosed in the embodiments of the present application.

In the embodiments of the present application, the first voice generated in the first sound zone in the vehicle cabin in the sound zone locking mode is acquired, where the first sound zone is the sound zone where the voice assistant is woken up. The multi-person interaction mode is triggered in response to the first voice, the second voice generated in the second sound zone in the vehicle cabin is acquired, and the second intent of the second voice is determined. The second intent is responded to in a case of determining that the second intent is related to the first intent, in which the first intent is related to the first voice. The intent of non-wake-up users can be responded to according to the correlation between the second voice and the first voice when the sound zone is locked. Therefore, a technical effect of multi-person interaction with the IVI in the sound zone locking mode can be realized, thereby improving the user experience.

Additional aspects and advantages of the application are set forth in part in the following description, and in part will become apparent from the following description, or be learned through the practice of the application.

### BRIEF DESCRIPTION OF THE DRAWINGS

The above-described and/or additional aspects and advantages of the application will become apparent and readily understandable from the following description of the embodiments taken in conjunction with the accompanying drawings.
FIG. 1 is a schematic flowchart of a voice interaction method according to an embodiment of the present application.
FIG. 2 is a schematic diagram of a second intent recognition process according to an embodiment of the present application.
FIG. 3 is a schematic flowchart of a voice interaction method according to another embodiment of the present application.
FIG. 4 is an overall schematic flowchart of a multi-round and multi-person voice interaction according to an embodiment of the present application.
FIG. 5 is a schematic diagram of a voice interaction apparatus according to an embodiment of the present application.
FIG. 6 shows a block diagram of an exemplary electronic device suitable for implementing embodiments of the present application.

### DETAILED DESCRIPTION

To enable a clearer understanding of the aforementioned objectives, features, and advantages of the present application, the solutions of the present application will be further described below. It should be noted that, in the case of no conflict, embodiments of the present application and features in the embodiments may be combined with each other.

Numerous specific details are set forth in the following description to facilitate a thorough understanding of the present application. However, the present application may also be implemented in other ways different from those described herein. Obviously, the embodiments in the specification are only a part of the embodiments of the present application, rather than all the embodiments.

It should be noted that an executing subject of a voice interaction method in embodiments of the present application may be a voice interaction apparatus, which may be implemented by means of software and/or hardware. The apparatus may be configured in an electronic device, and the electronic device may include, but is not limited to, a terminal, a server end, etc.

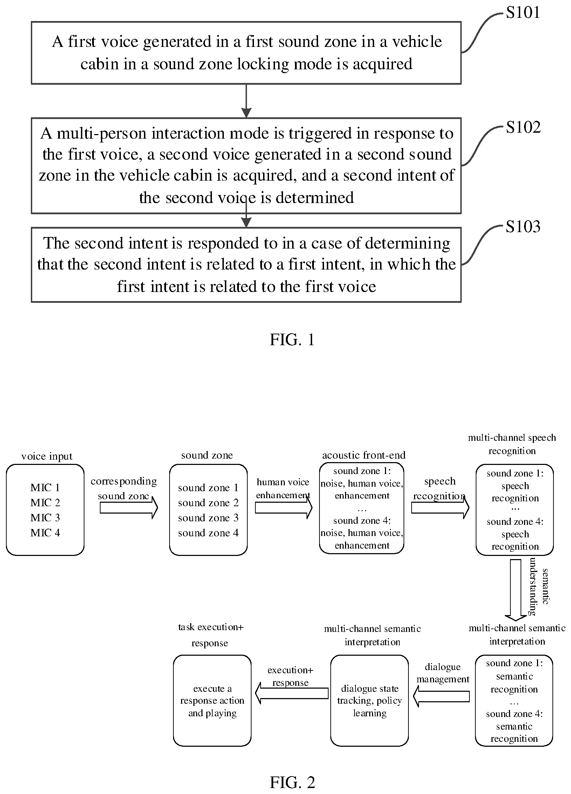

FIG. 1 is a schematic flowchart of a voice interaction method according to an embodiment of the present application. As shown in FIG. 1, the method includes the following steps.

At S101, a first voice generated in a first sound zone in a vehicle cabin in a sound zone locking mode is acquired.

When an in-vehicle infotainment (IVI) is in the sound zone locking mode, a sound zone where a user who wakes up a voice assistant is located among a plurality of sound zones in the vehicle cabin may be referred to as the first sound zone, that is to say, the user wakes up the voice assistant in the first sound zone.

A voice generated by the user in the first sound zone may be referred to as the first voice, and the first voice may be any voice, such as "turn on my seat heating function", "navigate to the mall", etc., which is not limited herein.

In embodiments of the present application, the IVI first acquires the first voice generated in the first sound zone, that is to say, the voice interaction method provided in the embodiments of the present application may be executed by the IVI.

In an optional example, an interior of the vehicle cabin is divided into four sound zones, including a driver's sound zone (sound zone 1), a front passenger's sound zone (sound zone 2), a rear left sound zone (sound zone 3), and a rear right sound zone (sound zone 4). The first sound zone in the embodiments of the present application may be any one of the four sound zones. For example, in the sound zone locking mode, if user 1 wakes up the voice assistant in sound zone 1, then sound zone 1 is regarded as the first sound zone.

At S102, a multi-person interaction mode is triggered in response to the first voice, a second voice generated in a second sound zone in the vehicle cabin is acquired, and a second intent of the second voice is determined.

As described in the background section, when the sound zone is locked, the voice assistant only acquires the voice from the sound zone where the wake-up user is located (i.e., the first sound zone), and the voices from other sound zones cannot be recognized, thus affecting the user experience.

In view of this, the embodiments of the present application, after acquiring the first voice, it is further determined whether an intent of the first voice triggers the multi-person interaction mode. In the multi-person interaction mode of the embodiments of the present application, the voice assistant can also acquire voices generated in other sound zones.

In the embodiments of the present application, any possible way may be used to determine whether the first voice triggers the multi-person interaction mode.

In some embodiments, interaction scenarios capable of triggering the multi-person interaction mode may be preset, such as a navigation scenario, a window control scenario, a seat control scenario, a music control scenario, etc., which is not limited herein. In addition, a keyword for each scenario may be determined in the embodiments. For example, in the navigation scenario, the keyword may be "navigation"; in the window control scenario, the keyword may be "window". Furthermore, a mapping table is constructed to record a plurality of keywords for triggering the multi-person interaction mode. In addition, the IVI in the embodiments may be configured with a pre-trained speech recognition model and a semantic recognition model. The speech recognition model may convert a voice into a corresponding text, and the semantic recognition model may recognize an intent of the text. In the embodiments of the application, after acquiring the first voice, the mapping table may first be acquired. Further, the speech recognition model may be used to convert the first voice into the corresponding text, and the semantic recognition model may be used to recognize the intent of the text (the intent may be referred to as a first intent, which can be understood as being in a text form). Further, it is determined whether the first intent (text) contains a keyword among the plurality of keywords, and the multi-person interaction mode is triggered in a case where the first intent contains the keyword.

Among the multiple sound zones in the vehicle cabin in the embodiments, all sound zones other than the sound zone where the wake-up user is located may be referred to as second sound zones. That is to say, the second sound zones of the embodiments include sound zone 2, sound zone 3, and sound zone 4.

A voice generated by the user in the second sound zone may be referred to as the second voice, and the second voice may be any voice content. In the embodiments, one second sound zone may generate the second voice, or a plurality of second sound zones may generate second voices simultaneously, and one second sound zone may generate one or more second voices, which is not limited herein.

For example, user 2 speaks in sound zone 2 (the second sound zone) in the vehicle cabin, and a content of the voice of user 2 may be referred to as the second voice. For another example, user 2 speaks in sound zone 2 (the second sound zone) in the vehicle cabin, and user 3 speaks in sound zone 3 (the second sound zone) at the same time, then contents of the voices of user 2 and user 3 may both be referred to as second voices.

In the embodiments, if the IVI determines that the multi-person interaction mode is triggered based on the first voice, the IVI may acquire the second voice of the second sound zone. Those skilled in the art can understand that, in the sound zone locking mode, only a voice activity detection (VAD) function of the sound zone (the first sound zone) where the wake-up user is located is enabled in the vehicle cabin, for example, a microphone (MIC) is turned on, while the VAD functions of other sound zones are disabled.

In some embodiments, in a case where the multi-person interaction mode is triggered, the IVI may enable the VAD functions of all second sound zones in the vehicle cabin to detect whether a plurality of second sound zones generate voices. If any second sound zone generates a voice, the IVI acquires the voice as the second voice.

In other embodiments, in a case where the multi-person interaction mode is triggered, in order to accurately acquire the generated second voice, the IVI may selectively enable the VAD functions of part of the second sound zones in the vehicle cabin.

For example, in the embodiments of the present application, seating position information of a user in the vehicle cabin may first be detected, in which the seating position information indicates seating positions of one or more users in the vehicle cabin. The seating position information may be, for example, that there is a user sitting on a driver's seat, a user sitting on a front passenger seat, and a user sitting on a rear left seat. In some embodiments, for example, the seating position information may be detected by a seat pressure sensor, or may also be detected by an image recognition apparatus arranged in the vehicle cabin, which is not limited herein.

Further, in the embodiments of the present application, the VAD function (MIC turned on) of the second sound zone where a user is seated may be enabled according to the seating position information, so as to acquire the second voice generated in the second sound zone. For example, if the seating position information indicates that there is a user sitting on the front passenger seat and a user sitting on the rear left seat, in the embodiments, the MICs of a front passenger position (sound zone 2) and rear left position (sound zone 3) may be turned on. When users in sound zone 2 (the second sound zone) and/or sound zone 3 (the second sound zone) generate voices, the voices may be collected by the MICs of sound zone 2 and/or sound zone 3 as second voices. If there is no user sitting on a rear right position (sound zone 4), the MIC of sound zone 4 is not turned on. Thus, in the embodiments of the present application, only the VAD function of the second sound zone where the user is present is enabled, so that the second voice can be accurately acquired and resources can be saved.

It should be noted that, in the multi-person interaction mode, the VAD function of the first sound zone is also enabled. That is to say, the voice assistant in embodiments of the present application may also respond to the voice of the user in the first sound zone.

After the second voice is acquired as described above, an intent (also referred to as a semantic) of the second voice is further determined in the embodiments of the present application, which may be referred to as the second intent. The second intent may be any intent, such as opening a window, turning on seat heating, selecting a navigation route, chatting, etc., which is not limited herein.

For example, in the embodiments of the present application, after acquiring the second voice, the second voice may be first converted into a corresponding text by using the speech recognition model, and the text may be referred to as target text. Further, the semantic recognition model is used to recognize the target text, so as to determine the intent of the target text, namely the second intent. In the embodiments of the present application, after acquiring the second voice, processing such as noise reduction and human voice enhancement may be further performed on the second voice. It can be understood that the speech recognition model and the semantic recognition model of the embodiments of the present application may be trained based on any models, and a training process is not limited in the embodiments of the present application.

In some embodiments, FIG. 2 is a schematic diagram of a second intent recognition process according to an embodiment of the present application. As shown in FIG. 2, acoustic front-end modules (i.e., for noise reduction, human voice enhancement, and other processing), the speech recognition models, and the semantic recognition models are configured for sound zone 1, sound zone 2, sound zone 3, and sound zone 4 respectively in the embodiments of the present application. That is to say, the voice generated by each sound zone can be processed independently by the acoustic front-end module, the speech recognition model, and the semantic recognition model configured for the corresponding sound zone, so that a multi-channel speech recognition and a multi-channel semantic interpretation can be realized.

For example, a voice (the second voice) generated in sound zone 2 may be collected via MIC 2 (with the VAD function). Further, the acoustic front-end module corresponding to sound zone 2 is used to perform the noise reduction and human voice enhancement processing on the voice. Further, the speech recognition model corresponding to sound zone 2 is used to perform a speech recognition on the processed voice to obtain a text (the target text). Further, the semantic recognition model corresponding to sound zone 2 is used to perform semantic understanding on the text, so as to obtain an intent (the second intent) of the second voice. Thus, when voices are generated in a plurality of sound zones simultaneously, the embodiments of the present application can process the voice of each sound zone in parallel, thereby improving a voice processing efficiency.

At S103, the second intent is responded to in a case of determining that the second intent is related to a first intent, in which the first intent is related to the first voice.

That is to say, after the second intent (opening a window) of the second voice is determined as described above, a correlation between the second intent and the first intent may be determined according to the embodiments of the present application. If it is determined that the second intent is related to the first intent, the IVI may respond to the second intent, i.e., control to open the window; if the second intent is not related to the first intent, the IVI may reject the second intent without making any response.

The first intent in the embodiments of the present application is related to the first voice.

In the embodiments of the present application, the intent of the first voice may be taken as the first intent. The manner of determining the first intent is the same as that of determining the second intent, which is not repeated here. That is to say, according to the embodiments of the present application, the second intent is responded to in a case where the second intent is related to the first intent of the first voice.

Any possible manner may be used to judge whether the first intent is related to the second intent, which is not limited herein.

In some embodiments, for example, whether the second intent is related to the first intent may be determined by calculating a cosine distance between the second intent and the first intent.

For example, if user 1 says "turn on my seat heating function" (i.e., the first voice) in sound zone 1 (the first sound zone), the first intent of the first voice is determined in the embodiments of the present application, and the first intent is to turn on seat heating. After that, if user 2 says "seat heating" (i.e., the second voice) in sound zone 2 (the second sound zone), it may be determined that the second intent of the second voice is also to turn on seat heating d in the embodiments of the present application. In this case, it may be determined that the second intent is related to the first intent according to the cosine distance in the embodiments of the present application, and the IVI may execute the second intent, i.e., turn on the seat heating function of user 2. If user 2 says "navigate to the mall" (i.e., the second voice) in sound zone 2 (the second sound zone), it may be determined that the second intent of the second voice is navigation in the embodiments of the present application. In this case, it may be determined that the second intent is not related to the first intent according to the cosine distance in the embodiments of the present application, and the IVI rejects the second intent without making any response.

In other embodiments, it may also be determined whether the second intent is the same as the first intent according to the keyword(s) of the second intent. The keyword(s) include, for example, words expressing the same intent such as "me too", "I want it too", "same", etc.

For example, if user 1 says "turn on my seat heating function" (i.e., the first voice) in sound zone 1 (the first sound zone), the first intent of the first voice may be determined in the embodiments of the present application, and the first intent is to turn on seat heating. After that, if user 2 says "I want it on too" (i.e., the second voice) in sound zone 2 (the second sound zone), the second intent of the second voice may be determined in the embodiments of the present application. In this case, it may be determined that the second intent is related to the first intent according to the keyword "I want it too" of the second intent in the embodiments of the present application, and the IVI executes the second intent.

In other embodiments, in a case where a plurality of second intents corresponding to a plurality of second voices are related to the first intent, the plurality of second intents are sequentially responded to according to a time sequence of acquiring the plurality of second voices.

For example, a time of acquiring the first voice is 12:00:00, and the first intent of the first voice is to turn on seat heating. After that, for example, the second voice of sound zone 2 (the second sound zone) "I want it on too" is acquired at 12:00:02, and the second voice of sound zone 3 (the second sound zone) "seat heating" is acquired at 12:00:05. Then it is determined that the second intents of the second voices of sound zone 2 and sound zone 3 are both related to the first intent. In the embodiments of the present application, the plurality of second intents are sequentially responds to according to the time sequence of acquiring the second voices of the two second sound zones, i.e., first turning on the seat heating of sound zone 2, and then turning on the seat heating of sound zone 3.

In some embodiments, in a case of determining that the responding to the second intent is completed, the multi-person interaction mode is exited, i.e., the voice assistant only acquires the voice of the first sound zone. Thus, an interference of other sound zones on the first sound zone can be reduced.

In the embodiments of the present application, the first voice generated in the first sound zone in the vehicle cabin in the sound zone locking mode is acquired, where the first sound zone is the sound zone where the voice assistant is woken up. The multi-person interaction mode is triggered in response to the first voice, the second voice generated in the second sound zone in the vehicle cabin is acquired, and the second intent of the second voice is determined. The second intent is responded to in a case of determining that the second intent is related to the first intent, in which the first intent is related to the first voice. The intent of non-wake-up users can be responded to according to the correlation between the second voice and the first voice when the sound zone is locked. Therefore, a technical effect of multi-person interaction with the IVI in the sound zone locking mode can be realized, thereby improving the user experience.

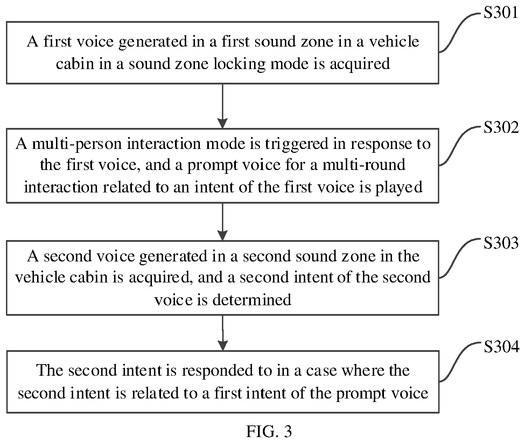

FIG. 3 is a schematic flowchart of a voice interaction method according to another embodiment of the present application. As shown in FIG. 3, the method includes the following steps.

At S301, a first voice generated in a first sound zone in a vehicle cabin in a sound zone locking mode is acquired.

For the description of S301, reference is made to the above embodiments, which is not repeated here.

At S302, a multi-person interaction mode is triggered in response to the first voice, and a prompt voice for a multi-round interaction related to an intent of the first voice is played.

In embodiments of the present application, the first voice may trigger one or more rounds of interaction. For example, in a navigation scenario, the multi-round interaction such as address selection and route selection is required. In this case, after judging that the first voice triggers the multi-person interaction mode, the IVI may play the prompt voice for the multi-round interaction related to the intent of the first voice.

For example, the first voice is "navigate to the supermarket", which triggers the multi-person interaction mode and the intent of the first voice is navigation. In this case, the IVI may play the prompt voice for a navigation-related multi-round interaction, and the prompt voice for each round of the multi-round interaction may be played sequentially. For example, the first broadcast prompt voice is "Multiple supermarkets have been found for you. Please select which one."

At S303, a second voice generated in a second sound zone in the vehicle cabin is acquired, and a second intent of the second voice is determined.

That is to say, after playing the prompt voice, in the embodiments of the present application, the VAD function of the second sound zone in the vehicle cabin is enabled to acquire the second voice generated in the second sound zone, and the second intent of the second voice is determined.

At S304, the second intent is responded to in a case where the second intent is related to a first intent of the prompt voice.

In embodiments of the present application, the intent of the prompt voice related to the first voice is taken as the first intent. That is to say, in the embodiments of the present application, whether the second intent of the second voice is related to the first intent of the prompt voice is determined, and if the second intent is related to the first intent of the prompt voice, the IVI responds to the second intent. The manner of determining the first intent of the prompt voice and the manner of judging the correlation are the same as those in the above embodiments, which is not repeated here.

For example, the above prompt voice is "Multiple supermarkets have been found for you. Please select which one", then the first intent is to ask which place to select. If the second voice is "the first place", the second intent of the second voice is related to the first intent. In this case, the IVI may respond to the second intent, for example, play a next round of prompt voice "Three routes have been found for you. Please select". If the second voice is "turn on seat heating", the second intent is not related to the first intent. In this case, the IVI does not respond to the second intent, i.e., does not play the prompt voice "Three routes have been found for you. Please select".

It can be understood that, after the IVI plays the next round of prompt voice in the embodiments of the present application, the IVI continues to detect and enable the VAD function of the second sound zone in the vehicle cabin to acquire the second voice generated in the second sound zone until a multi-round dialogue ends and the sound zone locking mode is restored.

Thus, in the embodiments of the present application, the correlation between the prompt voice and the second voice may be determined, so as to realize a technical effect of a multi-person and multi-round interaction in the sound zone locking mode under a guidance of the prompt voice, and further improve the user experience.

In the embodiments of the present application, the first voice generated in the first sound zone in the vehicle cabin in the sound zone locking mode is acquired, where the first sound zone is the sound zone where the voice assistant is woken up. The multi-person interaction mode is triggered in response to the first voice, the second voice generated in the second sound zone in the vehicle cabin is acquired, and the second intent of the second voice is determined. The second intent is responded to in a case of determining that the second intent is related to the first intent, in which the first intent is related to the first voice. The intent of non-wake-up users can be responded to according to the correlation between the second voice and the first voice when the sound zone is locked. Therefore, a technical effect of multi-person interaction with the IVI in the sound zone locking mode can be realized, thereby improving the user experience. In addition, in the embodiments of the present application, the correlation between the prompt voice and the second voice may be determined, so as to realize the technical effect of the multi-person and multi-round interaction in the sound zone locking mode under the guidance of the prompt voice, and further improve the user experience.

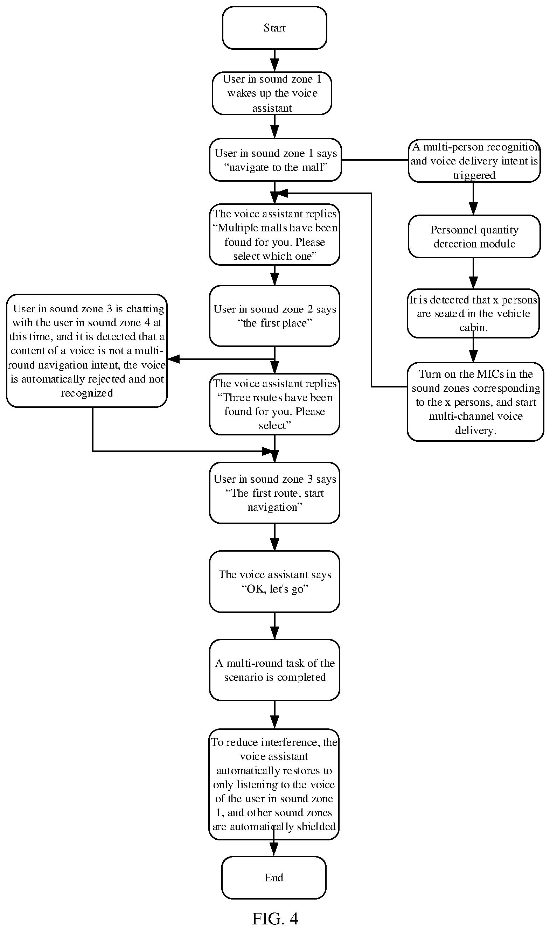

In an optional example, FIG. 4 is an overall schematic flowchart of a multi-round and multi-person voice interaction according to an embodiment of the present application. As shown in FIG. 4, in the sound zone locking mode, the user in sound zone 1 first wakes up the voice assistant. Further, the user in sound zone 1 says "navigate to the mall" (the first voice). In this case, it may be determined that the first voice triggers the multi-person interaction mode (i.e., multi-person voice delivery intent). Further, a personnel quantity detection is performed to determine that x persons are seated in the vehicle cabin, and MICs in the sound zones where the x persons are located are turned on to start multi-channel voice delivery, i.e., detecting second voices of a plurality of second sound zones. Further, the voice assistant replies "Multiple malls have been found for you. Please select which one" (i.e., the prompt voice). Further, the user in sound zone 2 says "the first place" (the second voice). In this case, it may be determined that the intent of the second voice is related to the intent of the prompt voice, and then the voice assistant may respond to the intent of the voice of the user in sound zone 2 and reply "Three routes have been found for you. Please select" (i.e., the prompt voice). If the user in sound zone 3 is chatting with the user in sound zone 4 at this time, and it is detected that a content of a voice is not a multi-round navigation intent, the voice is automatically rejected and not recognized. Further, if it is detected that the user in sound zone 3 says "The first route, start navigation" (the second voice), it may be determined that the second voice is related to the intent of the prompt voice, and then the second voice is responded to with the reply "OK, let's go". In this case, a multi-round task of the scenario is completed. To reduce interference, the voice assistant automatically restores to only listening to the voice of the user in sound zone 1, and other sound zones are automatically shielded, i.e., the sound zone locking mode is restored, and the entire process is ended.

To implement the above embodiments, the present application further provides a voice interaction apparatus.

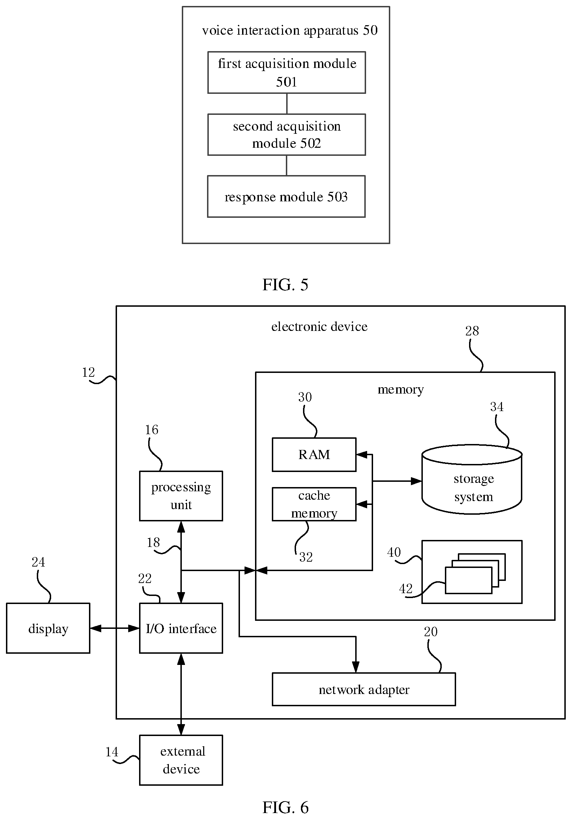

FIG. 5 is a schematic diagram of a voice interaction apparatus according to another embodiment of the present application.

As shown in FIG. 5, a voice interaction apparatus 50 includes:
a first acquisition module 501, configured to acquire a first voice generated in a first sound zone in a vehicle cabin in a sound zone locking mode,;
a second acquisition module 502, configured to trigger a multi-person interaction mode in response to the first voice, acquire a second voice generated in a second sound zone in the vehicle cabin, and determine a second intent of the second voice; and
a response module 503, configured to respond to the second intent in a case of determining that the second intent is related to a first intent, in which the first intent is related to the first voice.

In some embodiments, the voice interaction apparatus 50 further includes: a detection module, configured to detect seating position information of a user in the vehicle cabin; and an enabling module, configured to acquire, according to the seating position information, the second voice generated in the second sound zone where a user is seated.

In some embodiments, the second acquisition module 502 is further configured to: acquire a preset mapping table, in which a plurality of keywords for triggering the multi-person interaction mode are recorded in the mapping table; and trigger the multi-person interaction mode in response to the first intent of the first voice containing a keyword among the plurality of keywords..

In some embodiments, the response module 503 is further configured to: respond to the second intent in a case where the second intent is related to the first intent of the first voice.

In some embodiments, the voice interaction apparatus 50 further includes: a playback module, configured to play a prompt voice for a multi-round interaction related to an intent of the first voice; and the response module 503 is further configured to: respond to the second intent in a case where the second intent is related to the first intent of the prompt voice.

In some embodiments, the response module 503 is further configured to: in a case where a plurality of second intents corresponding to a plurality of second voices are related to the first intent, sequentially respond to the plurality of second intents according to a time sequence of acquiring the plurality of second voices.

In some embodiments, the second acquisition module 502 is further configured to: convert, by a speech recognition model configured for the second sound zone, the second voice generated in the second sound zone into a target text; and determine, by a semantic model configured for the second sound zone, the second intent corresponding to the target text of the second sound zone.

In some embodiments, the voice interaction apparatus 50 further includes: a restoration module, configured to exit the multi-person interaction mode in a case of determining that the responding to the second intent is completed.

In the embodiments of the present application, the first voice generated in the first sound zone in the vehicle cabin in the sound zone locking mode is acquired. The multi-person interaction mode is triggered in response to the first voice, the second voice generated in the second sound zone in the vehicle cabin is acquired, and the second intent of the second voice is determined. The second intent is responded to in a case of determining that the second intent is related to the first intent, in which the first intent is related to the first voice. The intent of non-wake-up users can be responded to according to the correlation between the second voice and the first voice when the sound zone is locked. Therefore, a technical effect of multi-person interaction with the IVI in the sound zone locking mode can be realized, thereby improving the user experience.

According to embodiments of the present application, the present application further provides an electronic device, a readable storage medium, and a computer program product.

To implement the above embodiments, the present application further provides a computer program product that, when executed by a processor, performs the voice interaction method proposed in the aforementioned embodiments of the present application.

FIG. 6 shows a block diagram of an exemplary electronic device suitable for implementing the embodiments of the present application. An electronic device 12 shown in FIG. 6 is merely an example and shall not impose any limitations on the functions and scope of use of the embodiments of the present application.

As shown in FIG. 6, the electronic device 12 is presented in a form of a general-purpose computing device. Components of the electronic device 12 may include, but are not limited to: one or more processors or processing units 16, a system memory 28, and a bus 18 that connects different system components (including the system memory 28 and the processing unit 16).

The bus 18 represents one or more of several types of bus structures, including a memory bus or a memory controller, a peripheral bus, an accelerated graphics port, a processor, or a local bus using any of a variety of bus structures. By way of example, such architectures include, but are not limited to, an industry standard architecture (ISA) bus, a micro channel architecture (MCA) bus, an enhanced ISA bus, a video electronics standards association (VESA) local bus, and a peripheral component interconnection (PCI) bus.

The electronic device 12 typically includes a variety of computer system readable media. Such media may be any available media that is accessible by the electronic device 12, including volatile and non-volatile media, removable and non-removable media.

The memory 28 may include computer system readable media in the form of volatile memory, such as random access memory (RAM) 30 and/or cache memory 32. The electronic device 12 may further include other removable/non-removable, volatile/non-volatile computer system storage media. By way of example only, a storage system 34 may be provided for reading from and writing to a non-removable, non-volatile magnetic medium (not shown in FIG. 6, commonly referred to as a "hard disk drive").

Although not shown in FIG. 6, a disk drive for reading from and writing to a removable non-volatile disk (e.g., a "floppy disk") and an optical disk drive for reading from and writing to a removable non-volatile optical disk (e.g., a compact disc read only memory (CD-ROM), a digital video disc read only memory (DVD-ROM), or other optical media) may be provided. In these cases, each drive may be connected to the bus 18 via one or more data media interfaces. The memory 28 may include at least one program product having a set of (e.g., at least one) program modules configured to perform the functions of various embodiments of the present application.

A program/utility 40 having a set of (at least one) program modules 42 may be stored in the memory 28, for example. Such program modules 42 include, but are not limited to, an operating system, one or more application programs, other program modules, and program data. Each of these examples or some combination thereof may include an implementation of a network environment. The program modules 42 generally perform the functions and/or methods in the embodiments described in the present application.

The electronic device 12 may also communicate with one or more external devices 14 (e.g., a keyboard, a pointing device, a display 24, etc.), with one or more devices that enable a user to interact with the electronic device 12, and/or with any devices (e.g., a network card, a modem, etc.) that enable the electronic device 12 to communicate with one or more other computing devices. Such communication may occur via an input/output (I/O) interface 22. Moreover, the electronic device 12 may also communicate with one or more networks (e.g., a local area network (LAN), a wide area network (WAN), and/or a public network such as the Internet) via a network adapter 20. As shown, the network adapter 20 communicates with other modules of the electronic device 12 via the bus 18. It should be understood that, although not shown, other hardware and/or software modules may be used in conjunction with the electronic device 12, including but not limited to: microcode, a device driver, a redundant processing unit, an external disk drive array, a RAID system, a tape drive, and a data backup storage system.

The processing unit 16 executes various functional applications by running programs stored in the system memory 28, for example, implementing the voice interaction method mentioned in the foregoing embodiments.

Other embodiments of the present application will be readily apparent to those skilled in the art upon consideration of the specification and practice of the invention disclosed herein. The present application is intended to cover any variations, uses, or adaptations of the present application that follow the general principles thereof and include common general knowledge or conventional technical means in the technical field that are not disclosed in the present application. The specification and embodiments are to be regarded as exemplary only, with the true scope and spirit of the present application being indicated by the following claims.

It should be understood that the present application is not limited to the precise structure described above and shown in the accompanying drawings, and that various modifications and changes may be made without departing from the scope thereof. The scope of the present application is limited only by the appended claims.

It should be noted that, in the description of the present application, the terms "first", "second", etc. are used for descriptive purposes only and shall not be construed as indicating or implying relative importance. Furthermore, in the description of the present application, the meaning of "a plurality of" is two or more, unless otherwise specified.

Any process or method description in a flowchart or otherwise described herein may be understood as representing a module, segment, or portion of code that includes one or more executable instructions for implementing steps of a particular logical function or process. The scope of the preferred embodiments of the present application includes additional implementations in which functions may be performed out of the order shown or discussed, including performing functions in a substantially simultaneous manner or in the reverse order, depending on the functions involved. This shall be understood by those skilled in the art to which the embodiments of the present application pertain.

It should be understood that various parts of the present application may be implemented in hardware, software, firmware, or a combination thereof. In the foregoing embodiments, multiple steps or methods may be implemented in software or firmware stored in a memory and executed by a suitable instruction execution system. For example, if implemented in hardware, as in another embodiment, it may be implemented by any one or a combination of the following techniques known in the art: discrete logic circuits having logic gates for implementing logic functions on data signals, application-specific integrated circuits (ASICs) having suitable combinational logic gates, programmable gate arrays (PGAs), field-programmable gate arrays (FPGAs), etc.

Those of ordinary skill in the art can understand that all or part of the steps carried by the methods of the foregoing embodiments may be completed by instructing relevant hardware via a program. The program may be stored in a computer-readable storage medium, and when executed, the program includes one or a combination of the steps of the method embodiments.

In addition, each functional unit in various embodiments of the present application may be integrated into one processing module, or each unit may exist physically alone, or two or more units may be integrated into one module. The above integrated module may be implemented in the form of hardware or in the form of a software functional module. If the integrated module is implemented in the form of a software functional module and sold or used as a stand-alone product, it may also be stored in a computer-readable storage medium.

The storage medium mentioned above may be a read-only memory, a magnetic disk, an optical disk, etc.

In the description of the present specification, descriptions with reference to the terms "one embodiment", "some embodiments", "example", "specific example", or "some examples" mean that a particular feature, structure, material, or characteristic described in connection with the embodiment or example is included in at least one embodiment or example of the present application. In the present specification, schematic expressions of the above terms do not necessarily refer to the same embodiment or example. Furthermore, the particular features, structures, materials, or characteristics described may be combined in any suitable manner in any one or more embodiments or examples.

Although the embodiments of the present application have been shown and described above, it should be understood that the foregoing embodiments are exemplary and shall not be construed as limiting the present application. Those of ordinary skill in the art may make changes, modifications, substitutions, and variations to the foregoing embodiments within the scope of the present application.

### Industrial Applicability

The first voice generated in the first sound zone in the vehicle cabin in the sound zone locking mode is acquired, where the first sound zone is the sound zone where the voice assistant is woken up. The multi-person interaction mode is triggered in response to the first voice, the second voice generated in the second sound zone in the vehicle cabin is acquired, and the second intent of the second voice is determined. The second intent is responded to in a case of determining that the second intent is related to the first intent, in which the first intent is related to the first voice. The intent of non-wake-up users can be responded to according to the correlation between the second voice and the first voice when the sound zone is locked. Therefore, a technical effect of multi-person interaction with the IVI in the sound zone locking mode can be realized, thereby improving the user experience.

## Claims

1. A voice interaction method, comprising:
acquiring a first voice generated in a first sound zone in a vehicle cabin in a sound zone locking mode, wherein the first sound zone is a sound zone where a voice assistant is woken up;
triggering a multi-person interaction mode in response to the first voice, acquiring a second voice generated in a second sound zone in the vehicle cabin, and determining a second intent of the second voice; and
responding to the second intent in a case of determining that the second intent is related to a first intent, wherein the first intent is related to the first voice.

2. The voice interaction method of claim 1, wherein acquiring the second voice generated in the second sound zone in the vehicle cabin comprises:
detecting seating position information of a user in the vehicle cabin; and
acquiring the second voice generated in the second sound zone where a user is seated according to the seating position information.

3. The voice interaction method of claim 1, wherein triggering the multi-person interaction mode in response to the first voice comprises:
acquiring a preset mapping table, wherein a plurality of keywords for triggering the multi-person interaction mode are recorded in the mapping table; and
triggering the multi-person interaction mode in response to the first intent of the first voice containing a keyword among the plurality of keywords.

4. The voice interaction method of claim 1, wherein responding to the second intent in a case of determining that the second intent is related to the first intent comprises:
responding to the second intent in a case where the second intent is related to the first intent of the first voice.

5. The voice interaction method of claim 1, wherein before acquiring the second voice generated in the second sound zone in the vehicle cabin, the method further comprises:
playing a prompt voice for a multi-round interaction related to an intent of the first voice;
wherein responding to the second intent in a case where the second intent is related to the first intent comprises:
responding to the second intent in a case where the second intent is related to the first intent of the prompt voice.

6. The voice interaction method of claim 1, wherein responding to the second intent in a case of determining that the second intent is related to the first intent comprises:
in a case where a plurality of second intents corresponding to a plurality of second voices respectively are related to the first intent, sequentially responding to the plurality of second intents according to a time sequence of acquiring the plurality of second voices.

7. The voice interaction method of claim 1, wherein determining the second intent of the second voice comprises:
converting, by a speech recognition model configured for the second sound zone, the second voice generated in the second sound zone into a target text; and
determining, by a semantic model configured for the second sound zone, the second intent corresponding to the target text of the second sound zone.

8. The voice interaction method of claim 1, wherein after responding to the second intent, the method further comprises:
exiting the multi-person interaction mode in a case of determining that the responding to the second intent is completed.

9. A voice interaction apparatus, comprising:
a first acquisition module configured to acquire a first voice generated in a first sound zone in a vehicle cabin in a sound zone locking mode, wherein the first sound zone is a sound zone where a voice assistant is woken up;
a second acquisition module configured to trigger a multi-person interaction mode in response to the first voice, acquire a second voice generated in a second sound zone in the vehicle cabin, and determine a second intent of the second voice; and
a response module configured to respond to the second intent in a case of determining that the second intent is related to a first intent, wherein the first intent is related to the first voice.

10. An electronic device, comprising:
at least one processor; and
a memory communicatively connected to the at least one processor;
wherein the memory stores an instruction executable by the at least one processor, and the instruction, when executed by the at least one processor, causes the at least one processor to perform the voice interaction method of any one of claims 1 to 8.

11. A non-transitory computer-readable storage medium having a computer instruction stored thereon, wherein the computer instruction is used to cause a computer to perform the voice interaction method of any one of claims 1 to 8.

12. A vehicle, wherein the vehicle comprises the electronic device of claim 10.

13. A computer program product comprising a computer-executable instruction or a computer program, wherein the computer-executable instruction or the computer program, when executed by a processor, implement the voice interaction method of any one of claims 1 to 8.
